# EUROPEAN PATENT SPECIFICATION

(11) **EP 4 000 883 B1**
(45) Date of publication and mention of the grant of the patent: **10.01.2024**
(21) Application number: 21207380.3
(22) Date of filing: 10.11.2021
(51) Int. Cl.: B29C 70/34, B29C 70/44, B01J 3/03, B29C 33/00, B29C 33/34, B29C 35/02, B29C 37/00

(54) **METHOD AND SYSTEM OF FORMING A PRESSURE CHAMBER DEFINED BY LAYUP MANDREL, ATOCLAVE AND PERIMETER SEALS**
VERFAHREN UND SYSTEM ZUM BILDEN EINER DRUCKKAMMER, DIE DURCH AUFLEGEDORN, AUTOKLAV UND UMFASSUNGSDICHTUNGEN DEFINIERT IST
PROCÉDÉ ET SYSTÈME DE FORMATION D'UNE CHAMBRE DE PRESSION DEFINIÉ PAR UN MANDRIN DE DRAPAGE, UN AUTOCLAVE ET DES JOINTS PÉRIMÈTRES

(30) Priority: 18.11.2020 US 202063115032 P; 30.04.2021 NL 2028113
(43) Date of publication of application: 25.05.2022
(73) Proprietor: The Boeing Company, Arlington, VA 22202 (US)
(72) Inventor: Smith, Daniel R., Chicago, 60606-1596 (US)
(74) Representative: Arnold & Siedsma

(56) References cited:
- US-A- 4 997 511

## Description

### Field

The disclosure relates to the field of processing of airframe or other high-performance components, and in particular, to autoclave processing of such components.

### Background

For fabrication of airframe or other high performance components made from composite materials, such as Carbon Fiber Reinforced Polymer (CFRP), autoclaves are utilized to harden uncured preforms into final part. Autoclaves are designed for processing composite components at elevated temperatures and or pressures and are heated by pumping heated gas into the autoclave at pressure. In a traditional factory environment, the autoclave itself may be designed to accommodate a wide range of component geometries or a plurality of components during the same processing cycle. This can result in large scale autoclaves which require a significant initial equipment investment, with substantial foundation, installation and auxiliary equipment costs.

For large scale autoclaves, their large thermal mass and large volume for receiving a variety of component geometries require significant use of energy and gas, impacting utility costs for their operation. Significant time and energy are require to heat and pump the heated gas into the autoclave, and additional heated gas must be pumped in and maintained or replenished until the autoclave and its contents have reached a desired processing temperature and process time, further increasing operation costs.

Large scale autoclaves may also hinder efficient assembly line flow within a factory environment, given their installation on a dedicated foundation and the use of gas storage tanks, such as for inert nitrogen, which need to position on an external wall. Further, the large scale, cost and operating costs of the autoclaves makes its use at the end of all pre-hardening fabrication processing in a centralized location, the norm. Transportation of components to and from the autoclave may not allow for optimized processing of components in a continuous or moving line manufacturing configuration. And the inherent time required for the heating, pressurizing, and cooling of such autoclaves further prohibits efficient processing time and factory operation.

Therefore, it would be desirable to have a method and apparatus that take into account at least some of the issues discussed above, as well as other possible issues.

The abstract of US 4 997 511 A, states: "a method and apparatus for mass producing composite products comprising a novel autoclave having a cylindrical vacuum chamber; a cylindrical compression chamber surrounding the vacuum chamber; a reusable, flexible diaphragm defining the boundary between the chambers; and means for supplying heat and pressure between the diaphragm and the compression chamber. A core or mandrel is wrapped with a fiber-reinforced resin and is placed in the autoclave within the flexible diaphragm. Alternatively, a part layup can be sandwiched between an elastomeric caul and a hard tool by wrapping with expendable shrink tape to accommodate a variety of part shapes having constant or nearly constant cross sections throughout their length. The autoclave is then sealed and evacuated, causing the diaphragm to compress the resin layer against its core or mandrel due to atmospheric or higher pressure in the compression chamber. The autoclave is then heated to cure the resin. Subsequently, the autoclave is unsealed and the finished product is removed, with the autoclave immediately available for reuse."

The abstract of WO 2021/032430 A1, states: "the invention relates to a method and a device for producing a component from a fiber composite material (2), comprising the steps of: • introducing a plurality of layers (10, 11) of fibers impregnated with a matrix on an inner mould (3) within a mould space (9) formed between the inner mould (3) and an outer mold (4), • placing a membrane (6) sealed against the outer mould on the fibers impregnated with the matrix in such a way that a cavity (7) forms between the outer mould (4) and the membrane (6), which cavity extends along the lateral surface of the outer mould, and • subjecting the cavity (7) to a temperature-controllable pressure fluid at a temperature greater than the melting point of the matrix and at a pressure greater than the ambient pressure such that the temperature-controllable pressure fluid acts with the pressure onto the membrane. In order to produce a component having at least one reinforcing layer, which has a particularly smooth, stepless surface, it is proposed that at least one reinforcing layer (11), which has a smaller extension and fibers aligned predominantly in a parallel manner, is placed locally on a part of the side of a base layer (10) facing the outer mould (4). Subsequently, a membrane (6) having an average roughness depth of less than 1.0 µm, preferably less than 0.1 µm, exerts a set pressure on the component (2) in the cavity.".

### Summary

Embodiments described herein provide autoclaves which receive preforms that have been laid-up in part of a continuous line fabrication process. The autoclaves are dimensioned to receive specific types of preforms, and include inner surfaces that correspond with contours defined by the preforms. One technical benefit is this reduces the amount of volume and mass that is heated within the autoclave, which reduces cycle time and increases efficiency. Furthermore, the autoclaves described herein may enable a hardened composite part to exit by continuing in the same direction that the autoclave was entered. This saves space on the factory floor, reducing expense.

Other illustrative embodiments (e.g., methods and computer-readable media relating to the foregoing embodiments) may be described below. The features, functions, and advantages that have been discussed can be achieved independently in various embodiments or may be combined in yet other embodiments further details of which can be seen with reference to the following description and drawings.

### Description of the Drawings

Some embodiments of the present disclosure are now described, by way of example only, and with reference to the accompanying drawings. The same reference number represents the same element or the same type of element on all drawings.
FIG. 1 is a block diagram of a line assembly system that includes an autoclave in an illustrative embodiment.
FIG. 2 is a flowchart illustrating a method for operating a line assembly system to harden a preform in an autoclave an illustrative embodiment.
FIG. 3 is a perspective view of a preform being inserted into an autoclave in an illustrative embodiment.
FIG. 4 is a perspective view of an autoclave into which a layup mandrel has been inserted in an illustrative embodiment.
FIGS. 5A-5C are views of the autoclave of FIG. 4 in an illustrative embodiment.
FIG. 5D is a view of a further layup mandrel and autoclave for a wing panel in an illustrative embodiment.
FIG. 5E depicts a variety of sealing regimes for an autoclave in an illustrative embodiment.
FIG. 6 is side view of a layup mandrel that includes extended regions for sealing to an autoclave in an illustrative embodiment.
FIG. 7 is a top view of an autoclave and preparation station in an illustrative embodiment.
FIGS. 8-12 are flowcharts illustrating further techniques of operating layup mandrels and complementary autoclaves in illustrative embodiments.
FIG. 13 depicts a method 1300 of moving a preform out of a clean room in an illustrative embodiment.
FIG. 14 is a flow diagram of aircraft production and service methodology in an illustrative embodiment.
FIG. 15 is a block diagram of an aircraft in an illustrative embodiment.

### Description

The figures and the following description provide specific illustrative embodiments of the disclosure. It will thus be appreciated that those skilled in the art will be able to devise various arrangements that, although not explicitly described or shown herein, embody the principles of the disclosure and are included within the scope of the disclosure. Furthermore, any examples described herein are intended to aid in understanding the principles of the disclosure, and are to be construed as being without limitation to such specifically recited examples and conditions. As a result, the disclosure is not limited to the specific embodiments or examples described below, but by the claims.

Airframes may be implemented as composite parts. Composite parts, such as Carbon Fiber Reinforced Polymer (CFRP) parts, are initially laid-up in multiple layers that together are referred to as a preform. Individual fibers within each layer of the preform are aligned parallel with each other, but different layers may exhibit different fiber orientations in order to increase the strength of the resulting composite part along different dimensions. Alternatively, the preform may also include woven fiber fabric or materials with random or discontinuous fibers. The preform may include a viscous resin that solidifies in order to harden the preform into a composite part. Carbon fiber that has been impregnated with an uncured thermoset resin or a thermoplastic resin is referred to as "prepreg." Other types of carbon fiber include "dry fiber" which has not been impregnated with thermoset resin but may include a tackifier or binder. Dry fiber may be infused with resin prior to curing. For thermoset resins, the hardening is a one-way process referred to as curing, while for thermoplastic resins, the resin may reach a viscous form if it is re-heated.

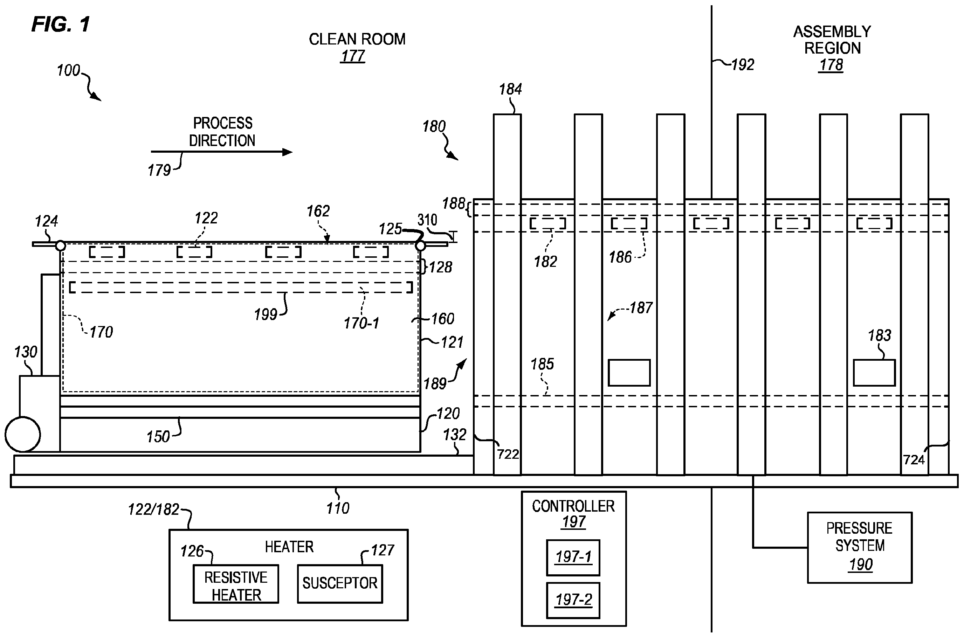

FIG. 1 is a block diagram of a line assembly system 100 that includes an autoclave 180 for hardening preforms (i.e., curing thermoset preforms, re-heating and consolidating thermoplastic preforms) into composite parts in an illustrative embodiment. Line assembly system 100 comprises any system, device, or component operable to iteratively pulse a preform 170 for a half barrel section of fuselage (or other arcuate section of fuselage comprising skin and stringers) in a process direction 179. In this embodiment, line assembly system 100 includes an autoclave 180 which hardens the preform 170 via the application of heat and pressure.

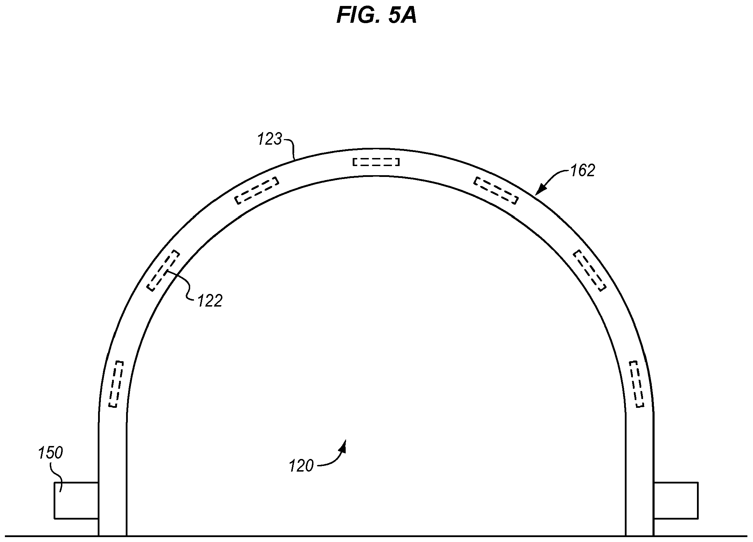

The preform 170 is laid-up onto a layup mandrel 120 that proceeds in a process direction 179 along a factory floor 110, and is driven by an Autonomous Guided Vehicle (AGV) 130 or along a track 132 that leads to the autoclave 180. The layup mandrel 120 includes a perimeter 121. A caul plate 160 (or a vacuum bag) is placed over the preform 170, and follows a contour 162 of the preform 170. A layup surface 123 (see FIG. 5A) of the layup mandrel 120 defines the contour 162 of the preform 170. The caul plate 160 seals the preform 170 to the layup mandrel 120 prior to sealing the layup mandrel 120 to an inner surface 186 of the autoclave 180. In this embodiment, the caul plate 160 is sealed via vacuum to the layup mandrel 120 (e.g., via a vacuum system internal to the layup mandrel 120), which results in application of consolidation force to the preform 170. In further embodiments, a vacuum bag (e.g., vacuum bag 714) is utilized to perform this task. During operation, the layup mandrel 120 is driven into a hollow portion (e.g., passageway 189) of the autoclave 180 via entrance 722. While the layup mandrel 120 is inserted into the autoclave 180, the layup mandrel 120 and the autoclave 180, along with perimeter seals 150 and caul plate 160, define a pressure chamber 187 (referred to herein as a vacuum, pressure, pressurized, or sealed chamber) for the preform 170. Perimeter seals 150 at the layup mandrel 120 seal against an inner surface 186 of the autoclave 180, which causes the autoclave 180 and the layup mandrel 120 together to form pressure chamber 187 in which the preform 170 is heated. That is, the perimeter seals 150 seal a perimeter 121 of the layup mandrel 120 to the inner surface 186 of the autoclave 180. In this embodiment, the layup mandrel 120 also includes gap seals 124, which may comprise rigid or other thermal barriers for sealing gap 310 (e.g., an arcuate gap) by clamping to the autoclave 180 to form a pressure chamber 187 (i.e., any sealed/sealable chamber capable of supporting a different-than-atmospheric amount of pressure). The gap seals 124 are mounted via hinges 125 to the layup mandrel 120. The gap seals 124 may form an arcuate shape and may comprise rigid segments of material. Although hinge-mounted gap seals 124 are discussed, they are but one embodiment of sealing in an autoclave 180, and other types of seals may be utilized to engage layup mandrel 120, caul plate 160, and autoclave 180 in order to form the pressure chamber 187.

Because the inner surface 186 of the autoclave 180 follows the contour 162 of the preform 170, it is complementary to the contour 162 and is separated by only a small distance (e.g. gap 310) from the contour 162 (e.g., less than 25.4 cm (ten inches), such as less than 5.08 cm (two inches)). This means that heat and pressure applied to the pressure chamber 187 is applied to a smaller volume than in traditional autoclaves, which increases heating efficiency and hardening speed. This also means that the autoclave 180 has less thermal mass, and that smaller pieces of equipment may be used to pressurize the autoclave 180 (e.g., with nitrogen gas or other inert fluids).

Heaters 182 are disposed within the autoclave 180 under an insulated shroud 188. In this embodiment, the insulated shroud 188 includes vanes 184 which provide structural reinforcement to the autoclave 180 and facilitate the dissipation of heat after the autoclave 180 has completed a heating cycle. Heaters 182 at the autoclave 180 and heaters 122 at the layup mandrel 120 may comprise radiant heaters that increase a temperature of the chamber. In one embodiment, heaters 122/182 are zonally controlled to ensure that temperature remains within an expected range uniformly across the entire surface of the preform 170. By continually monitoring and adjusting the amount of heat applied by the heaters 122/182 on a zone-by-zone basis, a temperature of the preform 170 is precisely controlled across the entirety of the preform 170.

The heaters 122/182 are insulated from the exterior of the autoclave 180 and from the interior of the layup mandrel 120 by insulated shroud 188 and insulated shroud 128, respectively. The insulated shrouds 128/188 may comprise vacuum sealed or other thermally insulated regions. A pressure system 190 controls a pressure at the pressure chamber 187 during hardening/processing, for example, by drawing a vacuum within the pressure chamber 187 or increasing a pressure of the pressure chamber 187. In this embodiment, vents 183 for driving heated gas into a vacuum chamber 187 formed between the layup mandrel 120, the autoclave 180, the perimeter seals 150, and the caul plate 160 are also provided. Including heaters 122/182 at the layup mandrel 120 and the autoclave 180 reduces the distance between the heaters 122/182 and the preform 170, which increases heat transfer efficiency. Using a "right sized" pressure chamber 187 that has little excess volume ensures that less gas (e.g., nitrogen gas or other inert fluid) is used by the line assembly system 100, which reduces material costs and also heat cycling time. The pressure chambers 187 discussed herein thereby reduce thermal mass and complexity of the autoclave structure, which reduces the amount of pressurized gas that needs to be stored.

In some embodiments, bladder 199 is disposed at the preform 170, and structurally supports any suitable hollow interior 170-1 of the preform 170 (e.g., a hollow interior 170-1 of a hat stringer disposed at the preform 170), thereby preventing the hollow interior 170-1 from collapsing during processing. The bladder 199 is therefore disposed underneath a caul plate 160 or vacuum bag that is used to consolidate the preform 170. In this manner, the bladder 199 supports a hollow interior 170-1 of the preform 170 against compaction caused by pressure applied by the autoclave 180. The bladder 199 communicates with a pressure chamber 187 formed by the autoclave 180, which means that when the pressure chamber 187 is pressurized, the bladder 199 is also pressurized and therefore inflates. In this manner, the bladder 199 is inflated via pressure from the pressure chamber 187.

After heating, the vanes 184 at the autoclave 180 facilitate cooling of the autoclave 180 to a handling temperature at which the layup mandrel 120 and composite part 714 are removed in the process direction 179, and a next layup mandrel 120 can be inserted from upstream. In a further embodiment, two layup mandrels 120 are arranged in series or tandem, and placed into the autoclave 180 at the same time. In such embodiments, each layup mandrel 120 may be sealed to the autoclave 180 to close a different door/entrance (e.g., entrance 722 or exit 724) of the autoclave 180. The next layup mandrel 120 is then inserted into the autoclave 180 and the process is repeated. This unique technical arrangement, which enables a layup mandrel 120 to define part of the boundary of a chamber 187 of the autoclave 180, saves both energy and time. Furthermore, because the autoclave 180 has less thermal mass than traditional autoclaves, it may be rapidly heated and cooled, which reduces cycle time and increases throughput.

In this embodiment, the autoclave 180 itself forms part of a boundary or gated passageway 189 between a clean room environment 177 and an assembly region/environment 178 (which does not operate as a clean room environment). For example, the autoclave 180 may be placed through a boundary 192, such as a shroud or wall that prevents dust from entering the clean room environment 177, with entrance 722 in the clean room environment 177. Thus, the autoclave 180 forms a portion of a boundary of a clean room environment 177. Upon completion of processing of the preform 170 into a composite part 714, the composite part leaves the autoclave 180 via exit 724 and enters the assembly region 178.

To restate the above, the autoclave 180 includes an inner surface 186 configured to slidably receive a layup mandrel 120, and to form a pressure chamber 187 in combination with the layup mandrel 120 after the layup mandrel 120 has been slidably received, and further defines an arcuate or contoured gap 310 defined by the inner surface 186 that is configured to receive a seal 124 that seals the layup mandrel 120 to the inner surface 186. The layup mandrel 120 defines a contour for a preform 170, and includes the perimeter seals 150 that seal the layup mandrel 120 to the autoclave 180 when the layup mandrel 120 is slid into the autoclave 180, and gap seals 124 that seal gap 310 (e.g., an arcuate gap) between the layup mandrel 120 and the autoclave 180 after the layup mandrel 120 is slid into the autoclave 180. In this manner, the arcuate layup mandrel 120 and the arcuate autoclave 180 form complementary arcs.

In one embodiment, preforms 170 are heated in an autoclave 180, which is operated as a dedicated station with a full-length pulse corresponding with the length of a half barrel section of fuselage. Therefore, there may be an assembly line for layup prior to the autoclave 180 and an assembly line after the autoclave 180 with upper and lower half barrel sections on the line in series. When lower half barrel sections are downstream of upper half barrel sections, the lower half barrel sections receive each type of work prior to the corresponding upper half barrel sections. For example, the lower half barrel section may be hardened before the upper half barrel section, receive frames before the upper half barrel section, etc. In one embodiment, the upper half barrel section and lower half barrel section are co-cured in a tandem autoclave, but the lower half barrel section exits the autoclave and enters an assembly line first. In one embodiment, two half barrel sections are processed at the same time by the same autoclave 180. Layup mandrels 120 for the half barrel sections are arranged in tandem and sealed together or independently to the autoclave 180 and processed at the same time.

A controller 197, comprising a processor 197-1 and a memory 197-2, manages the operations of the various components described herein, including for example, heaters 122/182, pressure system 190, autoclave 180, etc., to perform the methods described herein. In one embodiment, controller 197 is implemented as custom circuitry, as a hardware processor executing programmed instructions stored in memory, or some combination thereof.

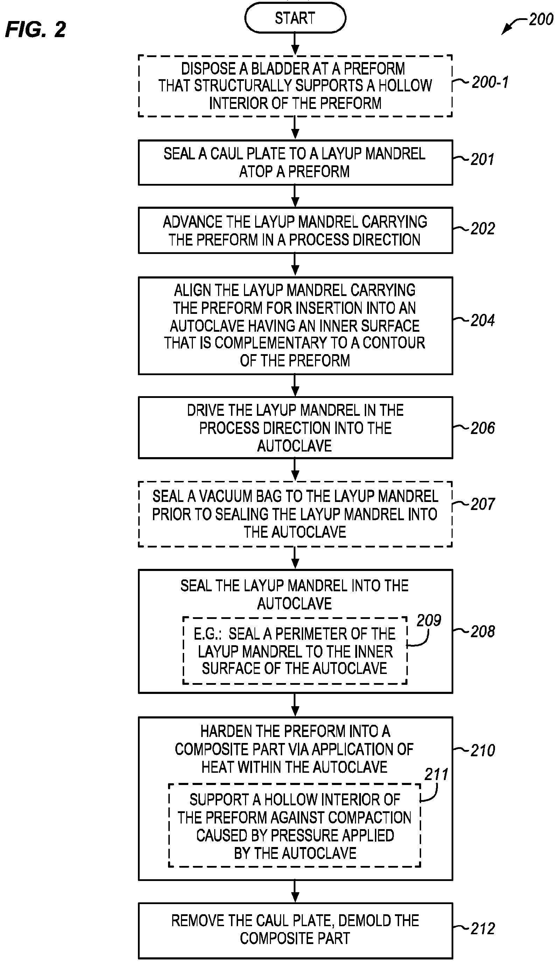

Further details of the operation of line assembly system 100 will be discussed with regard to FIG. 2. Assume, for this embodiment, that the layup mandrel 120 has received a preform 170, and that the preform 170 has been sealed onto the layup mandrel 120 via the application of caul plate 160. Hence, the preform 170 is ready to be hardened into a composite part 714.

FIG. 2 is a flowchart illustrating a method for operating a line assembly system to harden a preform in an autoclave an illustrative embodiment. The steps of method 200 are described with reference to line assembly system 100 of FIG. 1, but those skilled in the art will appreciate that method 200 may be performed in other systems. The steps of the flowcharts described herein are not all inclusive and may include other steps not shown. The steps described herein may also be performed in an alternative order. Furthermore, although the steps herein are described for half barrel sections, they may be applied to any suitable arcuate sections of fuselage, such as full barrel sections, one-quarter barrel sections, or other segment sizes. In further embodiments, the autoclaves are dimensioned to harden any suitable structures, such as wing panels, spars, frames, floor beams, stabilizers, doors, etc. In such cases, the insulated shroud 188 of the autoclave is sized and shaped to be complementary to a contour of a layup mandrel 120 for such components, and perimeter sealing 150 is used to seal the layup mandrel 120 to the autoclave 180. In one embodiment, prior to sealing, one or more bladders 199 are disposed at a preform 170 (optional step 200-1). These bladders 199 structurally support one or more hollow interiors 170-1 of the preform 170.

Step 201 includes sealing a caul plate 160 to a layup mandrel 120 atop a preform 170. This comprises taping, suction-adhering, vacuum sealing, or otherwise securing the caul plate 160 against the preform 170 while preventing airflow from crossing the caul plate 160 to reach the preform 170. Step 202 includes advancing the layup mandrel 120 carrying the preform 170 in a process direction 179. This may comprise driving the layup mandrel 120 via the AGV 130, or advancing the layup mandrel 120 via tracks 132 that couple with the autoclave 180. In one embodiment, the layup mandrel 120 has already advanced in the process direction 179 through multiple layup stations, as well as a preparation station at which the preform 170 is sealed to the layup mandrel 120. This may include sealing a caul plate 160 to the layup mandrel 120 prior to driving the layup mandrel 120 into the autoclave 180. In such embodiments, the caul plate 160 itself operates as a vacuum bag for the preform 170.

Step 204 includes aligning the layup mandrel 120 for insertion into the autoclave 180, which has an inner surface 186 that follows/is complementary to a contour 162 of the preform 170. This may comprise placing the layup mandrel 120 into position such that driving the layup mandrel 120 in the process direction 179 results in insertion of the layup mandrel 120 into the autoclave 180 via entrance 722. Thus, unlike autoclaves which themselves define all walls/boundaries of a pressure chamber, an autoclave 180 of method 200 forms a pressure chamber 187 together with the layup mandrel 120 and any perimeter seals 150, gap seals 124, and/or shrouds 128. The seals and/or shrouds engage the autoclave shroud 188, which can be longitudinally open at the factory floor.

In step 206, the AGV 130 (or a tug, or manual cart) drives the layup mandrel 120 in the process direction 179 into the autoclave 180 via entrance 722, thereby nesting the preform 170 to the inner surface 186 of the autoclave 180. This may comprise aligning perimeter seals 150 with a complementary feature 185 (e.g., a groove or projection) at the inner surface 186, and mating the perimeter seals 150 with the complementary feature 185 at the inner surface 186 to form an airtight boundary. In further embodiments, an airtight seal is formed without the need for the complementary feature 185, by carefully dimensioning the perimeter seals 150. Because the inner surface 186 follows the contour 162, driving the layup mandrel 120 into the autoclave 180 results in a gap 310 between the inner surface 186 of the autoclave 180 and the contour 162 of the preform 170 of less than 25.4 cm (ten inches) (e.g., less than 5.08 cm (two inches)). The airtight seal may be achieved via compression of a flexible coating or liner at the perimeter seals 150, which occurs when the perimeter seals 150 are driven into the complementary feature 185 of the autoclave 180. In further embodiments, pairs of layup mandrels 120 in series are placed into the autoclave 180. For example, pairs of layup mandrels 120 carrying separate half barrel sections (that will later be joined into a full barrel section after the half barrel sections are hardened and demolded), may both be placed into the autoclave 180 in series, such that one layup mandrel 120 is downstream of the other layup mandrel 120 within the autoclave 180. Sealing a vacuum bag 717 to the layup mandrel 120 may be performed prior to sealing the layup mandrel 120 into the autoclave 180 (optional step 207).

In step 208, the layup mandrel 120 is sealed into the autoclave 180. This may comprise sealing gap 310 between the layup mandrel 120 and the autoclave 180 at either or both ends (e.g. entrance 722 and exit 724) of the autoclave 180 along the process direction 179. Sealing may comprise taping the gap closed, or closing the gap with a solid clamped plate (not shown) that acts an intermediary between the inner surface 186 and the layup mandrel 120. In some embodiments, sealing may comprise sealing gap seals 124 that seal the gap 310 between the layup mandrel 120 and the autoclave 180 after the layup mandrel 120 is slid into the autoclave 180. In one embodiment, a perimeter 121 of the layup mandrel 120 is sealed to the inner surface 186 of the autoclave 180 (optional step 209). In embodiments with multiple layup mandrels 120 placed into the autoclave (e.g., in series), each layup mandrel 120 may seal a separate entrance (e.g. entrance 722 or exit 722) (or portion thereof) of the autoclave 180. When the layup mandrels 120 are arranged in series, each may be sealed separately, or the layup mandrels 120 may utilize tandem sealing/joining techniques (e.g., where one layup mandrel 120 forms an upstream seal with the autoclave 180, and another layup mandrel 120 forms a downstream seal with the autoclave 180). After the sealing has been completed, the layup mandrel 120 defines a lower boundary of the autoclave 180 (i.e., a lower boundary of a pressure chamber 187 at the autoclave 180). In one embodiment, sealing the layup mandrel 120 into the autoclave 180 comprises sealing an arcuate gap 310 between the preform 170 and the inner surface 186 of the autoclave 180.

Step 210 includes hardening the preform 170 into a composite part 714 via application of heat and pressure within the autoclave 180. For thermoset preforms, this comprises heating the preform 170 to a curing temperature and applying pressure to consolidate that preform 170 into a desired shape. For thermoplastic preforms, this may comprise increasing a temperature of the preform 170 to a melting temperature of thermoplastic within the preform 170, consolidating the preform 170 under pressure, and cooling the preform 170 until it hardens/consolidates into a composite part 714. Hardening the preform 170 may comprise activating the heaters 122 in the layup mandrel 120 that are disposed under the preform 170 (e.g., beneath the layup surface 123), and/or activating the heaters 182 in the autoclave 180 that are disposed outside of the inner surface 186. The heaters 182 and/or 122 may comprise resistive heaters 126, susceptors 127 that respond to electromagnetic fields, etc. During hardening, one or more bladders 199 may support one or more hollow interiors 170-1 of the preform 170 against compaction caused by pressure applied by the autoclave 180 (optional step 211).

After the composite part 714 has been hardened, the autoclave 180 is unsealed, and the layup mandrel 120 may proceed in the process direction 179 out of the autoclave 180 via exit 724 in order to receive further work. Step 212 includes removing the caul plate 160, performing any desired post-hardening trimming or machining, and demolding the composite part 714. The composite part 714 then receives additional work (e.g., installation of frames at the composite part, installation of windows at the composite part) and the layup mandrel 120 is cleaned.

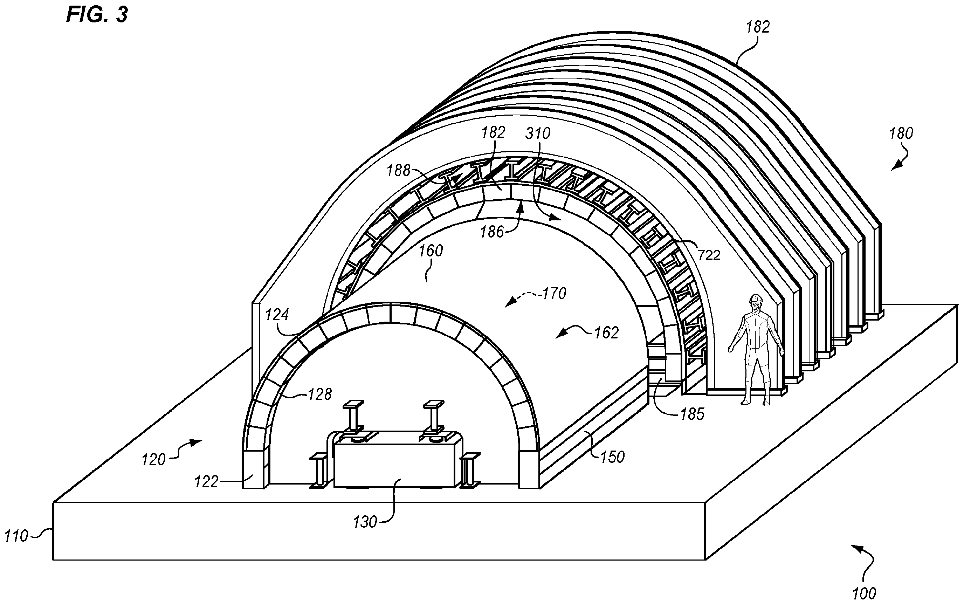

FIG. 3 is a perspective view of a preform 170 being inserted into an autoclave 180 (e.g., under an insulated shroud 188 of the autoclave 180) in an illustrative embodiment. FIG. 3 illustrates how the layup mandrel 120 forms a boundary of the autoclave 180 in the process direction 179, and further illustrates perimeter seals 150 interlocking with the autoclave 180. Gap seals 124 lock with a shroud 188 of the autoclave 180 to seal ends of the layup mandrel 120 into place. That is, gap seals 124 close the pressure chamber 187 by bridging gaps between the layup mandrel 120 and the autoclave 180 (e.g. at entrance 722 and exit 724, not show in FIG. 3).

Furthermore, FIG. 3 illustrates that the arcuate gap 310 between the layup mandrel 120 and the inner surface 186 of autoclave 180 remains narrow (i.e., less than 25.4 cm (ten inches)) along the entirety of the contour 162 of the preform 170. That is, a volume between the layup mandrel 120 and the autoclave 180 is designed to be kept to a minimum to eliminate the amount of dead air space that must be heated and/or pressurized during operation. This reduction in stored energy dramatically reduces safety management approaches and system complexity when compared a traditional autoclave. This reduced volume provides an opportunity for zonal or local control of heating and pressurization if desired.

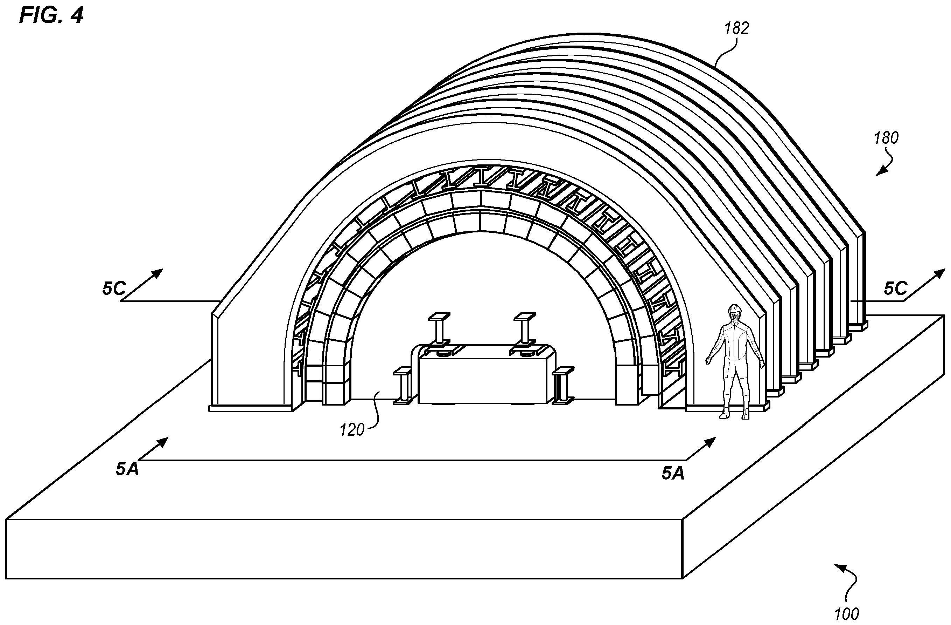

FIG. 4 is a perspective view of an autoclave 180 into which a layup mandrel 120 has been inserted in an illustrative embodiment. In this embodiment, a single layup mandrel 120 has been placed into the autoclave 180. However, in further embodiments, multiple ones of the layup mandrels 120 may be placed into the autoclave 180 for curing at once.

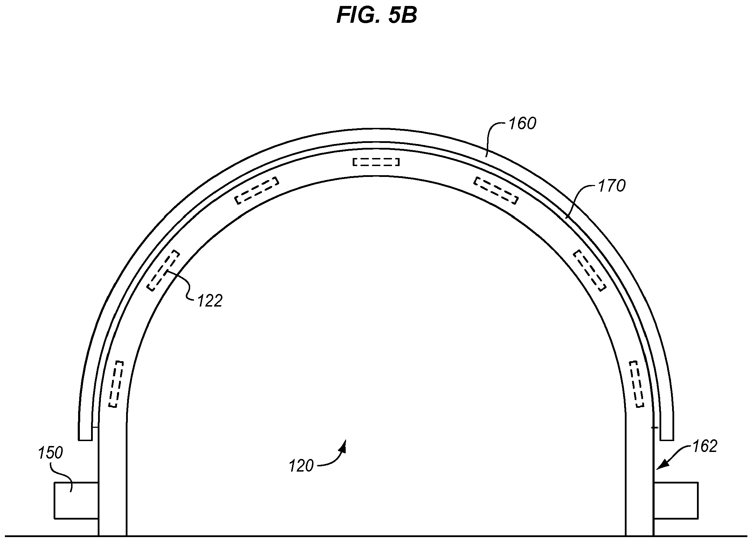

FIG. 5A, which corresponds with view arrows 5A of FIG. 4, shows a layup mandrel 120 prior to layup while awaiting entry into an autoclave 180. The layup surface 123 of the layup mandrel 120 defines a contour 162, and layup mandrel 120 includes heaters 122 beneath layup surface 123. In FIG. 5B, layup has completed, and the layup mandrel 120 is covered by a preform 170 and a caul plate 160.

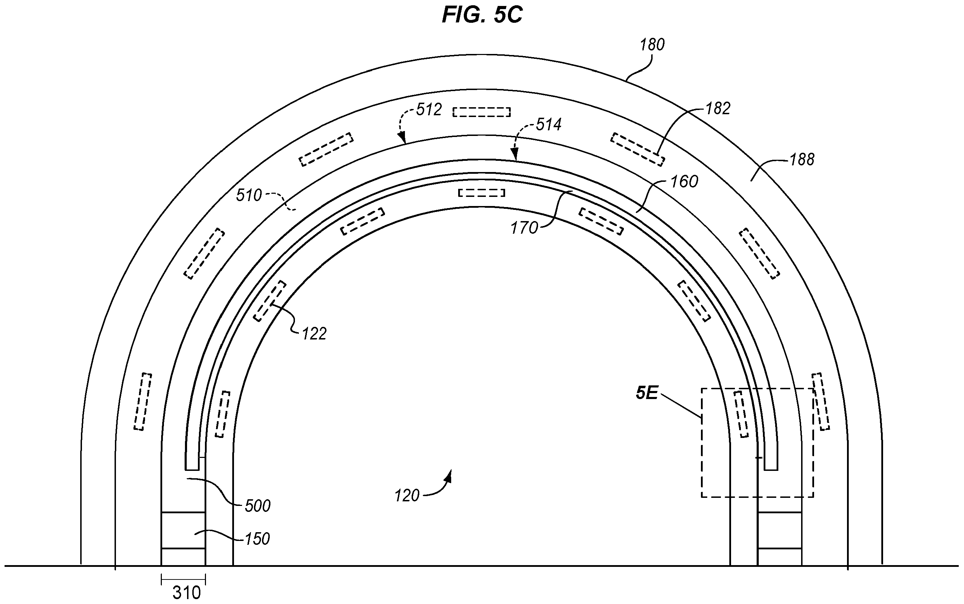

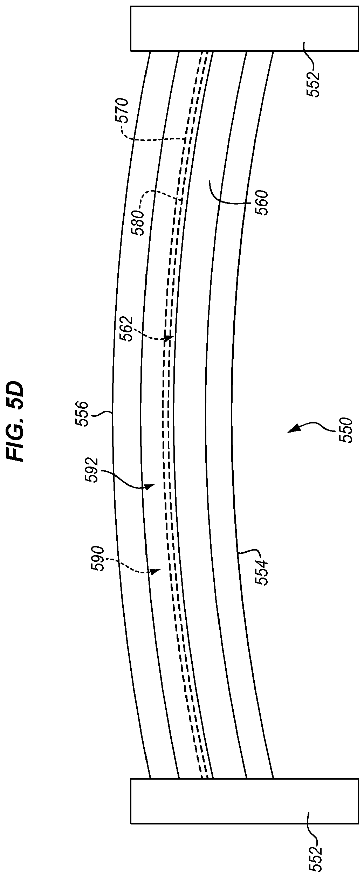

FIG. 5C is an end view of the autoclave 180 of FIG. 4 in an illustrative embodiment, and corresponds with view arrows 5C of FIG. 4. FIG. 5C makes clear that gap 310 between heaters 122 and heaters 182 is sealed by a cover 500 disposed between the layup mandrel 120 and the autoclave 180. The cover 500 is annular in shape, and may comprise a rigid tool or a flexible component that thermally insulates the autoclave 180 and is sealed to the autoclave 180. In this embodiment, the autoclave 180 forms an upper boundary 512 of a pressure chamber 510, while the layup mandrel 120 (or a caul or preform molded thereto) forms a lower boundary 514 of the pressure chamber 510. Seals may be applied in region 5E in order to form a pressure chamber 187. FIG. 5D is a view of a further layup mandrel 560 and autoclave 550 for a wing panel in an illustrative embodiment. In this embodiment, the layup mandrel 560 is inserted into an autoclave 550 that includes supports 552, lower wall 554, and upper wall 556. A preform 580 is laid-up onto a contour 562 of the layup mandrel 560, and a caul plate 570 covers the preform 580. Together, the upper wall 556, supports 552, and the caul plate 570 form a pressure chamber 590 for hardening the preform 580. Perimeter seals 592 form boundaries of the pressure chamber 590 into and out of the page. For components of different dimensions, the perimeter seals 592 follow the different dimensions of layup mandrels for those components.

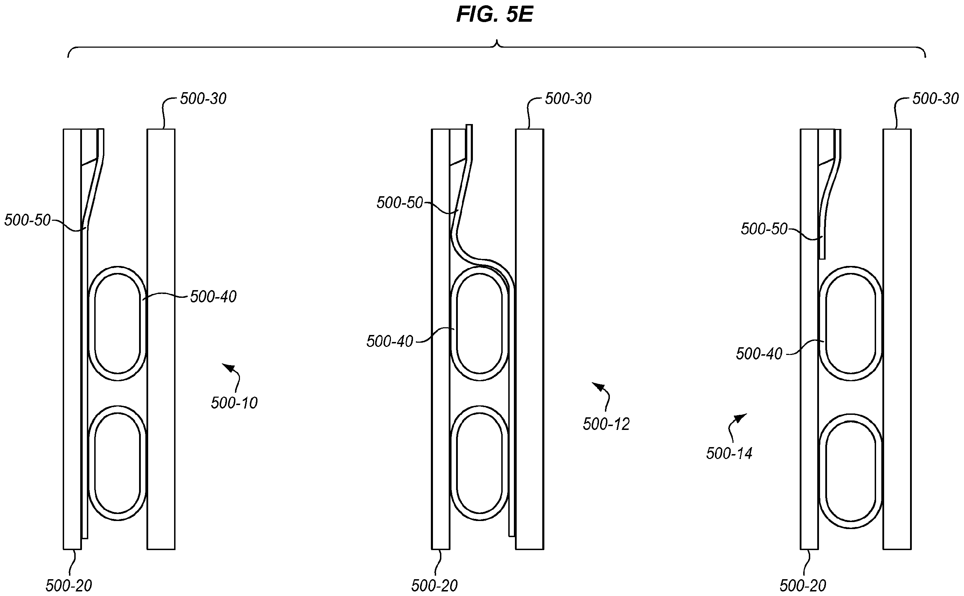

FIG. 5E depicts a variety of sealing regimes for an autoclave 180 in an illustrative embodiment, and corresponds with region 5E of FIG. 5C. In a first arrangement 500-10 depicted on the left, seals 500-40 directly contact an autoclave wall 500-30, and directly contact a caul plate 500-50 that contacts a layup mandrel surface 500-20. In a second arrangement 500-12, the seals 500-40 directly contact caul plate 500-50, which itself directly contacts the autoclave wall 500-30. The seals 500-40 also directly contact the layup mandrel surface 500-20. In a third arrangement 500-14, the seals 500-40 independently bridge the autoclave wall 500-30 and the layup mandrel surface 500-20, and the caul plate 500-50 terminates prior to reaching the seals 500-40.

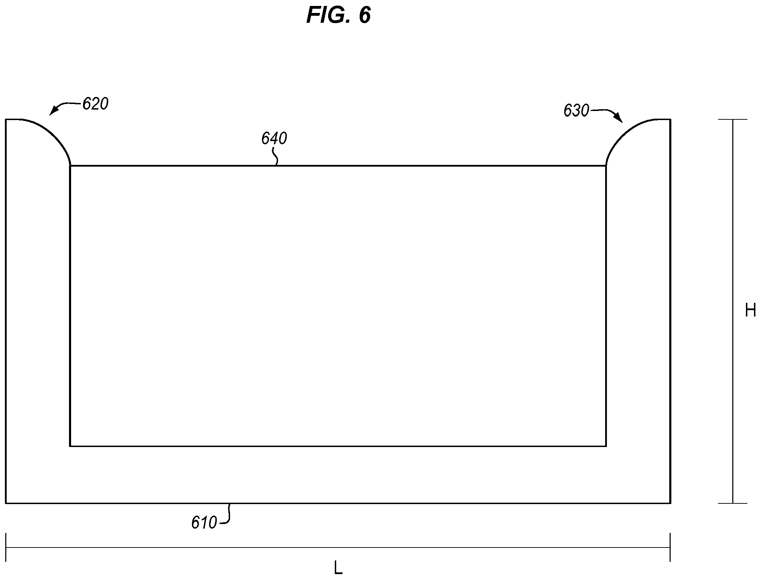

FIG. 6 is side view of a layup mandrel 610 that includes extended regions for sealing to an autoclave in an illustrative embodiment. Layup mandrel 610 may be utilized to facilitate fabrication of a section of fuselage that has a smaller cross section or length than other sections of fuselage being fabricated via an autoclave. The layup mandrel 610 itself has a length L corresponding to a length of the autoclave, and includes extended regions 620 and 630 having heights H (and/or cross-sectional arcs) that correspond with entrances/exits of the autoclave. Thus, the extended regions 620 and 630 are capable of being sealed to the autoclave, because the layup mandrel 610 is dimensioned to match the autoclave, regardless of a size of the preform being hardened. Meanwhile, a layup region 640 is dimensioned to a contour for a preform that is smaller than other preforms used for the autoclave. Thus, the layup region 640 may exhibit a smaller diameter, height, or length than the autoclave, but this is compensated for by the dimensions of the layup mandrel 610.

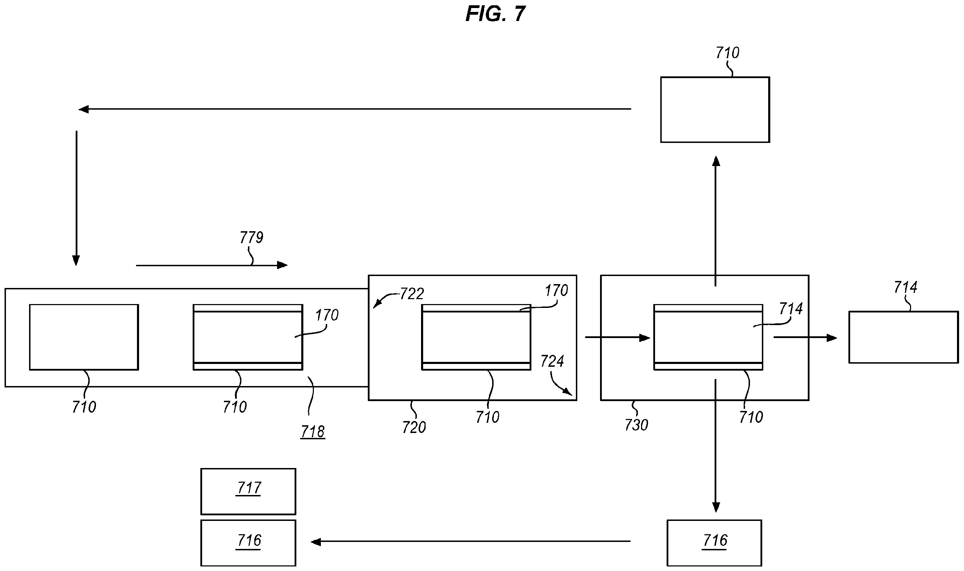

FIG. 7 is a top view of an autoclave and preparation station in an illustrative embodiment. FIG. 7 illustrates layup mandrels 710 that receive preforms 170, and receive caul plates 716 and/or vacuum bags 717 at preparation station 718. The layup mandrels 710 are arranged in series for insertion into an autoclave 720 having entrance 722 at a first location and exit 724 at a second location separated by a distance in a process direction 779. In one embodiment, the autoclave 720, entrance 722, and exit 724 are all arcuate. These processes may also be utilized, with modification to geometry as needed, to facilitate fabrication of wing panels, spars, ribs, or frames. The autoclave 720 forms a portion of an arcuate pressure chamber which is completed by inserting a layup mandrel 710 into the autoclave 720 and sealing the layup mandrel 710 into position.

After exiting the autoclave 720, layup mandrels 710 proceed to a debag station 730 that performs caul plate 716 removal and/or vacuum debagging, where a composite part 714 is demolded from the layup mandrels 710. The layup mandrels 710 and caul plates 716 are then cleaned and returned to a start of the fabrication line in order to receive a new preform 170 for a composite part 714. The composite part 714 continues in the process direction 779 for post cure processing into an aircraft (e.g., receiving fasteners, window installations, etc.). This process ensures that the layup mandrels 710 and caul plates 716 are capable of being rapidly and efficiently re-used, without the formation of waste products and without requiring an expansive amount of space at the factory floor.

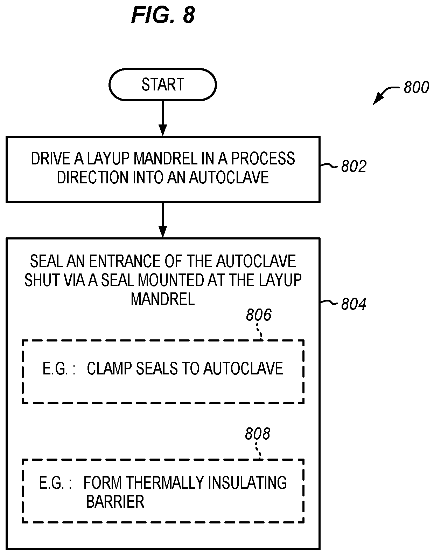

FIGS. 8-11 are flowcharts illustrating further techniques of operating layup mandrels and complementary autoclaves in illustrative embodiments. These methods will be described according to the autoclave 180 in FIG. 1. FIG. 8 illustrates a method 800 of sealing an autoclave 180. The method includes driving or inserting a layup mandrel 120 in a process direction 179 into an autoclave 180 in step 802, and sealing an entrance 722 (and optionally an exit 724) of the autoclave 180 shut via seals 124 mounted at the layup mandrel 120 in step 804. Sealing the entrance 722 shut may comprise clamping the seals 124 to the autoclave 180 (optional step 806). Thus, according to the processes described above, a layup mandrel 120 is brought to within a desired distance (e.g. gap 310) of an autoclave 180 (e.g., a shroud 188 of the autoclave 180), bladders 199 at the layup mandrel 120 are enabled to receive pressure from the autoclave 180, and the perimeter 121 of the layup mandrel 120 is sealed to the autoclave 180 to form a pressure chamber 187, which is then pressurized.

In another embodiment, the method further includes heating a preform 170 at the layup mandrel 120 via heaters 182 at the autoclave 180 and/or heating a preform 170 at the layup mandrel 120 via heaters 122 at the layup mandrel 120. In a further embodiment, the method further includes securing a preform 170 to the layup mandrel 120 by sealing edges of a caul plate 160 to the layup mandrel 120. In yet another embodiment, driving the layup mandrel 120 into the autoclave 180 forms a pressure chamber 187 between the layup mandrel 120 and the autoclave 180. This involves bringing three separate elements (perimeter seals 150, caul plate 160, autoclave 180) together to form a pressure chamber 187, and then removing several of the components when hardening is completed. In a still further embodiment, the method also includes driving the layup mandrel 120 in the process direction 179 out of the autoclave 180 via exit 724. In yet another embodiment, sealing the entrance 722 comprises sealing an arcuate gap 310 between the layup mandrel 120 and the autoclave 180, thereby forming a thermally insulating barrier (optional step 808). The concepts discussed herein may be utilized for any suitable composite parts, such as wing panels, ribs, spars, and/or frames for an airframe of an aircraft. In such embodiments, the shroud 188 of the autoclave 180 is dimensioned (i.e., sized and shaped) to be complementary to the contour (e.g., contour 562 of FIG. 5D) of the layup mandrel 120 upon which a preform 170 has been placed. This complementary aspect enables the layup mandrel 120 itself to form a border of the autoclave 180, and enables a perimeter seal 150 to be used to seal the autoclave 180 and the layup mandrel 120 together.

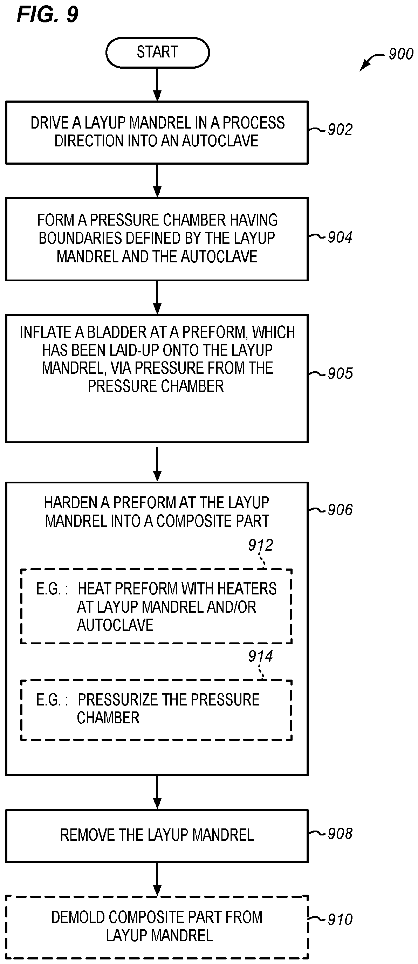

FIG. 9 depicts a method 900 of forming a pressure chamber 187 at an autoclave 180. The method includes driving a layup mandrel 120 in a process direction 179 into an autoclave 180 in step 902, forming a pressure chamber 187 having boundaries defined by the layup mandrel 120 and the autoclave 180 in step 904, and inflating one or more bladders 199 at a preform 170, which has been laid-up onto the layup mandrel 120, via pressure from the pressure chamber 187 in step 905. The bladders 199 support a hollow interior 170-1 of the preform 170 against compaction. Method 900 further includes hardening the preform 170 at the layup mandrel 120 into a composite part 714 in step 906. Hardening the preform 170 may comprise heating the preform 170 with heaters 122 at the layup mandrel 120 and/or heaters 182 at the autoclave 180 (optional step 912). In a further embodiment, hardening the preform 170 may comprise using heated gas from a pressure system 190 at the autoclave 180 to pressurize the pressure chamber 187 (optional step 914). Method 900 further includes removing the layup mandrel 120 in step 908.

In a further embodiment, driving the layup mandrel 120 is performed via an Autonomous Guided Vehicle (AGV) 130, via a cart, via wheels, etc. In a further embodiment, the method 900 also includes demolding the composite part 714 from the layup mandrel 120 (optional step 910). In a further embodiment, the autoclave 180 forms a first boundary of the pressure chamber 187, the layup mandrel 120 forms a second boundary of the pressure chamber 187, and the perimeter seals 150 form a third boundary. In a further embodiment, the pressure chamber 187 is arcuate, and forming a pressure chamber 187 comprises sealing an arcuate gap 310 (as well as longitudinal edges) between the layup mandrel 120 and the autoclave 180 (see step 804 of FIG. 8). In yet another embodiment, sealing the arcuate gap 310 comprises forming a thermally insulating (and pressure retaining) barrier (see step 808 of FIG. 8).

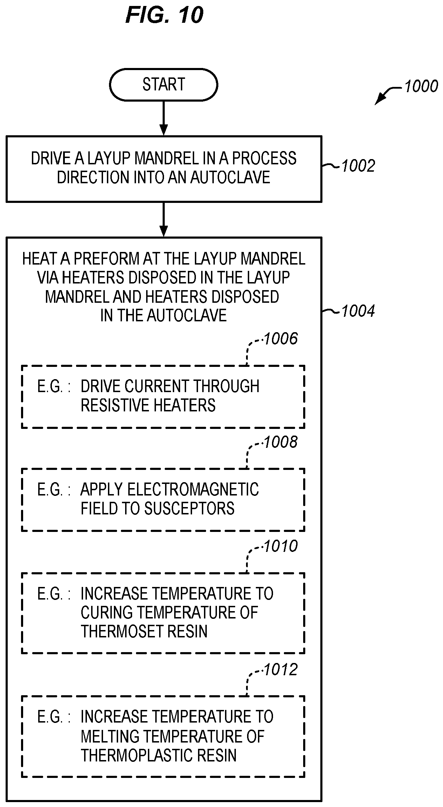

FIG. 10 illustrates a method 1000 of sealing an autoclave 180. The method includes driving (e.g., via an AGV, on rails, manually, etc.) a layup mandrel 120 in a process direction 179 into an autoclave 180 in step 1002, and heating a preform 170 at the layup mandrel 120 via heaters 122 disposed in the layup mandrel 120 and via heaters 182 disposed in the autoclave 180 in step 1004. Heating the preform 170 may comprise driving current through resistive heaters 126 at the layup mandrel 120 and the autoclave 180 (optional step 1006), or applying an electromagnetic field to susceptors 127 at the layup mandrel 120 and the autoclave 180 (optional step 1008). In a still further embodiment, the preform 170 is heated via pressurized and heated gas pumped into the pressure chamber 187 of the autoclave 180. In a still further embodiment, heating the preform 170 comprises increasing a temperature of the preform 170 to a curing temperature of a thermoset resin within the preform 170 (optional step 1010), or heating the preform 170 comprises increasing a temperature of the preform 170 to a melting temperature of a thermoplastic resin within the preform 170 (optional step 1012), after which the preform 170 is cooled below the melting temperature.

In further embodiments, the method 1000 further comprises securing a preform 170 to the layup mandrel 120 by sealing edges of a caul plate 160 to the layup mandrel 120. After the preform 170 has been hardened, the method 1000 may further comprise driving the layup mandrel 120 in the process direction 179 out of the autoclave 180. Furthermore, prior to heating, the method 1000 may comprise sealing a gap 310 between the layup mandrel 120 and the autoclave 180 with a thermally insulating barrier (e.g., a seal). The layup mandrel 120 is dimensioned for extraction from the autoclave 180 via travel in the same process direction 179 that the layup mandrel 120 was inserted into the autoclave 180. Furthermore, the layup mandrel 120 forms a lower boundary of a chamber 187 of the autoclave 180 while inserted into the autoclave 180.

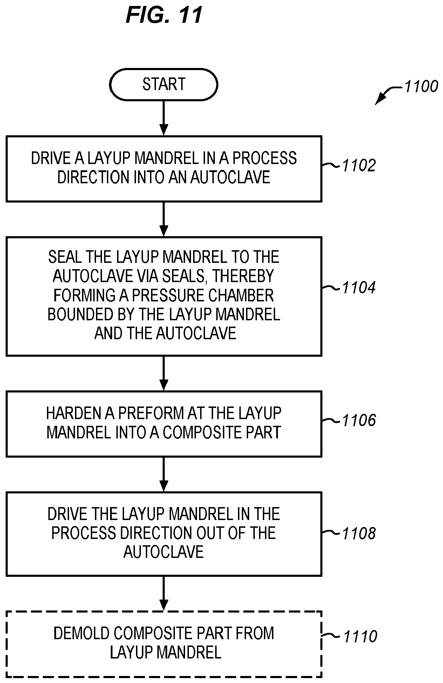

FIG. 11 depicts a method 1100 of sealing an autoclave 180 in an illustrative embodiment. The method 1100 includes driving (e.g., via AGV 130, via rails, via manual carts, etc.) a layup mandrel 120 in a process direction 179 into an autoclave 180 in step 1102, and sealing the layup mandrel 120 to the autoclave 180 via seals 124/150, thereby forming a pressure chamber 187 bounded by the layup mandrel 120 and the autoclave 180 in step 1104. Method 1100 further includes hardening a preform 170 at the layup mandrel 120 into a composite part 714 in step 1106, and driving the layup mandrel 120 in the process direction 179 out of the autoclave 180 in step 1108. The autoclave 180 operates as a portal between a pre-cure/clean room environment 177 and a post hardening environment (e.g., assembly region 178).

In a further embodiment, driving the layup mandrel 120 is performed via an Autonomous Guided Vehicle (AGV) 130. Method 1100 may further include demolding the composite part 714 from the layup mandrel 120 (optional step 1110). In one embodiment, hardening the preform 170 comprises heating the preform 170 with heaters 122 at the layup mandrel 120 and/or heaters 182 at the autoclave 180 (see step 912 of FIG. 9). In one embodiment, driving the layup mandrel 120 into the autoclave 180 forms the pressure chamber 187 between the layup mandrel 120 and the autoclave 180 (i.e., after perimeter seals 150 and/or other seals are in place). In a further embodiment, driving the layup mandrel 120 in the process direction 179 out of the autoclave 180 transitions the layup mandrel 120 out of a clean room environment 177. That is, the layup mandrel 120 is kept in a clean room environment 177 during layup and preparation, and then is moved into an autoclave 180 which forms a boundary between a clean room environment 177 and a non-clean room environment (e.g., assembly region 178). After hardening is completed, the layup mandrel 120 advances out of the autoclave 180 into the non-clean room environment, where demolding and trimming occurs. The layup mandrel 120 is then cleaned and returned to the clean room environment 177 to receive a preform 170 for another composite part 714.

In one embodiment, sealing the layup mandrel 120 to the autoclave 180 comprises sealing an arcuate gap 310 between the layup mandrel 120 and the autoclave 180 (see step 804 of FIG. 8). Sealing the arcuate gap 310 may comprise forming a thermally insulating barrier between the autoclave 180 and the layup mandrel 120 (see step 808 of FIG. 8).

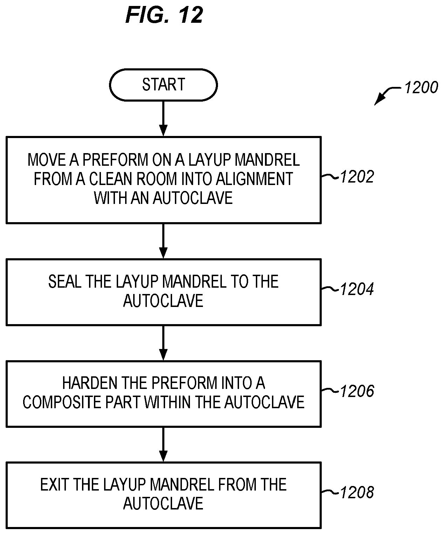

FIG. 12 depicts a method 1200 of sealing an autoclave 180 in an illustrative embodiment. Method 1200 includes moving a preform 170 on a layup mandrel 120 from a clean room 177 into alignment with an autoclave 180 in step 1202. In one embodiment, a caul plate 160 is placed over the preform 170, and conforms to the layup mandrel 120. Step 1204 includes sealing the layup mandrel 120 to the autoclave 180. In one embodiment, this results in a pressure chamber 187 between the caul plate 160 and the autoclave 180. The pressure chamber 187 is bounded by the autoclave 180 on one side and the caul plate 160 on another side. Step 1204 further includes hardening the preform 170 into a composite part 714 within the autoclave 180 in step 1206, and exiting the layup mandrel 120 from the autoclave 180 in step 1208. As the layup mandrel 120 exits from the autoclave 180, it has fully left the clean room environment 177 and enters an assembly environment 178 where demolding and trimming of the resulting composite part 714 is performed.

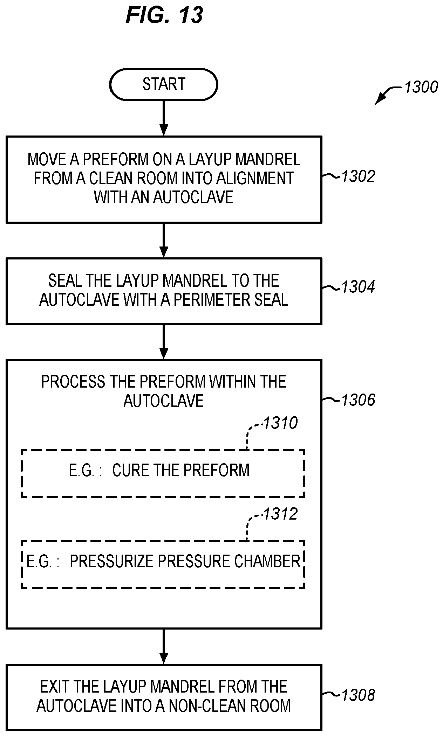

FIG. 13 depicts a method 1300 of moving a preform 170 out of a clean room 177 in an illustrative embodiment. The method includes moving a preform 170 on a layup mandrel 120 from a clean room 177 into alignment with an autoclave 180 in step 1302, and sealing the layup mandrel 120 to the autoclave 180 with a perimeter seal 150 in step 1304. Sealing of the layup mandrel 120 to the autoclave 180 results in a pressure chamber 187 around the preform 170. Method 1300 further includes processing the preform 170 within the autoclave 180 in step 1306. Processing the preform 170 may include curing the preform 170 (optional step 1310), pressuring the pressure chamber 187 formed by the layup mandrel 120 and the autoclave 180 (optional step 1312), or other processing actions. Method 1300 further includes exiting the layup mandrel 120 from the autoclave 180 into a non-clean room (e.g., assembly region 178) in step 1308.

In the following examples, additional processes, systems, and methods are described in the context of an autoclave in a continuous line assembly environment.

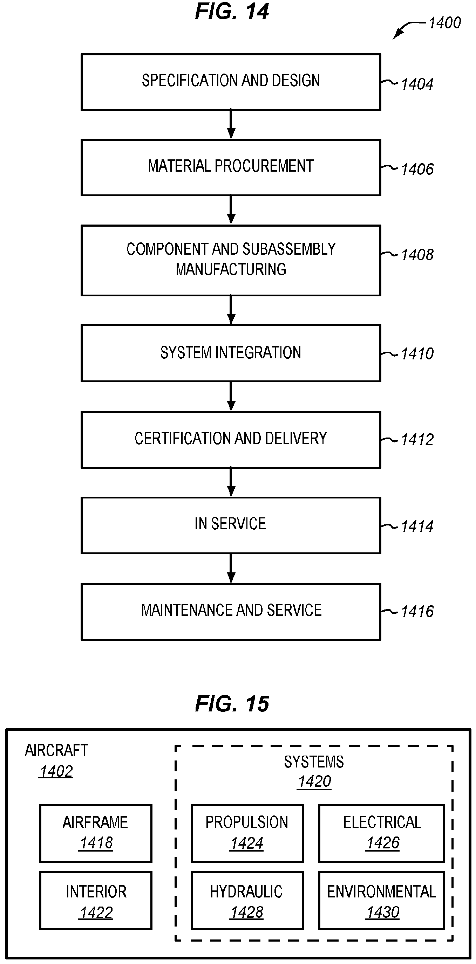

Referring more particularly to the drawings, embodiments of the disclosure may be described in the context of aircraft manufacturing and service in method 1400 as shown in FIG. 14 and an aircraft 1402 as shown in FIG. 15. During pre-production, method 1400 may include specification and design 1404 of the aircraft 1402 and material procurement 1406. During production, component and subassembly manufacturing 1408 and system integration 1410 of the aircraft 1402 takes place. Thereafter, the aircraft 1402 may go through certification and delivery 1412 in order to be placed in service 1414. While in service by a customer, the aircraft 1402 is scheduled for routine work in maintenance and service 1416 (which may also include modification, reconfiguration, refurbishment, and so on). Apparatus and methods embodied herein may be employed during any one or more suitable stages of the production and service described in method 1400 (e.g., specification and design 1404, material procurement 1406, component and subassembly manufacturing 1408, system integration 1410, certification and delivery 1412, service 1414, maintenance and service 1416) and/or any suitable component of aircraft 1402 (e.g., airframe 1418, systems 1420, interior 1422, propulsion system 1424, electrical system 1426, hydraulic system 1428, environmental 1430).

Each of the processes of method 1400 may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in FIG. 15, the aircraft 1402 produced by method 1400 may include an airframe 1418 with a plurality of systems 1420 and an interior 1422. Examples of systems 1420 include one or more of a propulsion system 1424, an electrical system 1426, a hydraulic system 1428, and an environmental system 1430. Any number of other systems may be included. Although an aerospace example is shown, the principles of the present disclosure may be applied to other industries, such as the automotive industry.

As already mentioned above, apparatus and methods embodied herein may be employed during any one or more of the stages of the production and service described in method 1400. For example, components or subassemblies corresponding to component and subassembly manufacturing 1408 may be fabricated or manufactured in a manner similar to components or subassemblies produced while the aircraft 1402 is in service. Also, one or more apparatus embodiments, method embodiments, or a combination thereof may be utilized during the subassembly manufacturing 1408 and system integration 1410, for example, by substantially expediting assembly of or reducing the cost of an aircraft 1402. Similarly, one or more of apparatus embodiments, method embodiments, or a combination thereof may be utilized while the aircraft 1402 is in service, for example and without limitation during the maintenance and service 1416. For example, the techniques and systems described herein may be used for material procurement 1406, component and subassembly manufacturing 1408, system integration 1410, service 1414, and/or maintenance and service 1416, and/or may be used for airframe 1418 and/or interior 1422. These techniques and systems may even be utilized for systems 1420, including, for example, propulsion system 1424, electrical system 1426, hydraulic 1428, and/or environmental system 1430.

In one embodiment, a part comprises a portion of airframe 1418, and is manufactured during component and subassembly manufacturing 1408. The part may then be assembled into an aircraft in system integration 1410, and then be utilized in service 1414 until wear renders the part unusable. Then, in maintenance and service 1416, the part may be discarded and replaced with a newly manufactured part. Inventive components and methods may be utilized throughout component and subassembly manufacturing 1408 in order to manufacture new parts.

Any of the various control elements (e.g., electrical or electronic components) shown in the figures or described herein may be implemented as hardware, a processor implementing software, a processor implementing firmware, or some combination of these. For example, an element may be implemented as dedicated hardware. Dedicated hardware elements may be referred to as "processors", "controllers", or some similar terminology. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, a network processor, application specific integrated circuit (ASIC) or other circuitry, field programmable gate array (FPGA), read only memory (ROM) for storing software, random access memory (RAM), non-volatile storage, logic, or some other physical hardware component or module.

Also, a control element may be implemented as instructions executable by a processor or a computer to perform the functions of the element. Some examples of instructions are software, program code, and firmware. The instructions are operational when executed by the processor to direct the processor to perform the functions of the element. The instructions may be stored on storage devices that are readable by the processor. Some examples of the storage devices are digital or solid-state memories, magnetic storage media such as a magnetic disks and magnetic tapes, hard drives, or optically readable digital data storage media.

Illustrative, non-exclusive examples represent background art that is useful for understanding the invention, are described in the following paragraphs.

According to an aspect of the present disclosure, a method (900) of forming a pressure chamber (187) at an autoclave is disclosed, the method comprising:
driving (902) a layup mandrel (120) in a process direction (179) into an autoclave (180);
forming (904) the pressure chamber (187) having boundaries defined by the layup mandrel (120), the autoclave (180), and perimeter seals (150);
hardening (906) a preform (170) at the layup mandrel (120) into a composite part (714); and
removing (908) the layup mandrel (120).

Optionally, driving (902) the layup mandrel (120) is performed via an Autonomous Guided Vehicle (AGV) (130).

Optionally, the method further comprises:
demolding (910) a composite part (714) from the layup mandrel (120).

Optionally, hardening (906) the preform (170) comprises heating (912) the preform (170) with heaters (122) at the layup mandrel (120).

Optionally, hardening (906) the preform comprises heating (912) the preform with heaters (182) at the autoclave (180).

Optionally, hardening (906) the preform (170) comprises pressurizing (914) the pressure chamber (187) with a pressure system (190). Optionally, the method further comprises:
inflating (905) a bladder (199) at the preform (170) via pressure from the pressure chamber (187), wherein the bladder (199) supports a hollow interior (170-1) of the preform (170) against compaction.

Optionally, forming (904) the pressure chamber (187) comprises sealing (804) an arcuate gap (310) between the layup mandrel (120) and the autoclave (180). Optionally, sealing (804) the arcuate gap (310) comprises forming (808) a thermally insulating barrier.

According to an aspect of the present disclosure, a portion of an aircraft (1402) assembled according to the method (900) of any one of the foregoing examples is disclosed.

According to an aspect of the present disclosure, a system (100) is disclosed, the system comprising:
an autoclave (180) that includes a hollow portion (189);
a layup mandrel (120) that defines a layup region (640) for a preform (170), and that is dimensioned for insertion into the autoclave (180) into the hollow portion (189), thereby defining a pressure chamber (187) for hardening the preform (170) into a composite part (714); and
seals (124, 150) that close the pressure chamber (187) by bridging a gap (310) between the layup mandrel (120) and the autoclave (180).

Optionally, the system further comprises:
an Autonomous Guided Vehicle (AGV) (130) that drives the layup mandrel (120) into the hollow portion (189).

Optionally, the layup mandrel (120) and the autoclave (180) both include heaters (122, 182) for hardening the preform (170) into the composite part (714).

Optionally, the system further comprises:
a pressure system (190) that pressurizes the pressure chamber (187).

Optionally, the heaters (122, 182) comprise resistive heaters (126).

Optionally, the heaters (122, 182) comprise susceptors (127).

Optionally, the pressure chamber (187) is arcuate.

Optionally, the autoclave (180) forms a portion of a boundary (192) of a clean room environment (177).

Optionally, the layup mandrel (120) is arcuate.

Optionally, the autoclave (180) further comprises vents (183) for driving heated air into the pressure chamber (187) formed between the layup mandrel (120) and the autoclave (180). According to an aspect of the present disclosure, fabricating a portion of an aircraft (1402) using the system (100) of any one of foregoing examples is disclosed.

According to an aspect of the present disclosure, a method (1300) of moving a preform (170) out of a clean room (177) is disclosed, the method comprising:
moving (1302) a preform (170) on a layup mandrel (120) from a clean room (177) into alignment with an autoclave (180);
sealing (1304) the layup mandrel (120) to the autoclave (180) with a perimeter seal (150);
processing (1306) the preform (170) within the autoclave (180); and
exiting (1308) the layup mandrel (120) from the autoclave (180) into a non-clean room (178).

Optionally, processing (1306) the preform (170) comprises curing (1310) the preform (170).

Optionally, processing (1306) the preform (170) comprises pressurizing (1312) a pressure chamber (187) formed by the layup mandrel (120) and the autoclave (180).

According to an aspect of the present disclosure, a portion of an aircraft (1402) assembled according to the method (1300) of foregoing examples is disclosed.

Although specific embodiments are described herein, the scope of the disclosure is not limited to those specific embodiments. The scope of the disclosure is defined by the following claims.

## Claims

1. A method (900) of forming a pressure chamber (187) at an autoclave, the method comprising:
driving (902) a layup mandrel (120) in a process direction (179) into an autoclave (180);
forming (904) the pressure chamber (187) having boundaries defined by the layup mandrel (120), the autoclave (180), and perimeter seals (150);
hardening (906) a preform (170) at the layup mandrel (120) into a composite part (714); and
removing (908) the layup mandrel (120).

2. The method (900) of claim 1, wherein:
driving (902) the layup mandrel (120) is performed via an Autonomous Guided Vehicle (AGV) (130).

3. The method (900) of claim 1 or 2, further comprising:
demolding (910) a composite part (714) from the layup mandrel (120).

4. The method (900) of claim 1, 2, or 3, wherein:
hardening (906) the preform (170) comprises heating (912) the preform (170) with heaters (122) at the layup mandrel (120) and/or with heaters (182) at the autoclave (180).

5. The method (900) of any one of claims 1 to 4, wherein:
hardening (906) the preform (170) comprises pressurizing (914) the pressure chamber (187) with a pressure system (190), further preferably comprising inflating (905) a bladder (199) at the preform (170) via pressure from the pressure chamber (187), wherein the bladder (199) supports a hollow interior (170-1) of the preform (170) against compaction.

6. The method (900) of any one of claims 1 to 5, wherein:
forming (904) the pressure chamber (187) comprises sealing (804) an arcuate gap (310) between the layup mandrel (120) and the autoclave (180), wherein sealing (804) the arcuate gap (310) preferably comprises forming (808) a thermally insulating barrier.

7. The method (1300) of any one of claims 1 to 6, the method comprising exiting (1308) the layup mandrel (120) from the autoclave (180) into a non-clean room (178).

8. A system (100) comprising:
an autoclave (180) that includes a hollow portion (189);
a layup mandrel (120) that defines a layup region (640) for a preform (170), and that is dimensioned for insertion into the autoclave (180) into the hollow portion (189), thereby defining a pressure chamber (187) for hardening the preform (170) into a composite part (714); and
seals (124, 150) that close the pressure chamber (187) by bridging a gap (310) between the layup mandrel (120) and the autoclave (180).

9. The system (100) of claim 8, further comprising:
an Autonomous Guided Vehicle (AGV) (130) that drives the layup mandrel (120) into the hollow portion (189).

10. The system (100) of claim 8 or 9, wherein:
the layup mandrel (120) and the autoclave (180) both include heaters (122, 182) for hardening the preform (170) into the composite part (714), wherein the heaters (122, 182) preferably comprise resistive heaters (126) and/or susceptors (127).

11. The system (100) of claim 8, 9 or 10, further comprising:
a pressure system (190) that pressurizes the pressure chamber (187).

12. The system (100) of any one of claims 8 to 11, wherein:
the pressure chamber (187) is arcuate and/or the layup mandrel (120) is arcuate.

13. The system (100) of any one of claims 8 to 12, wherein:
the autoclave (180) forms a portion of a boundary (192) of a clean room environment (177).

14. The system (100) of any one of claims 8 to 13, wherein:
the autoclave (180) further comprises vents (183) for driving heated air into the pressure chamber (187) formed between the layup mandrel (120) and the autoclave (180).

15. Fabricating a portion of an aircraft (1402) using the system (100) of any one of claims 8 to 14.

## Patentansprüche

1. Verfahren (900) zum Bilden einer Druckkammer (187) an einem Autoklav, wobei das Verfahren Folgendes umfasst:
Antreiben (902) eines Auflegedorns (120) in einer Verarbeitungsrichtung (179) in einen Autoklav (180);
Bilden (904) der Druckkammer (187) mit Begrenzungen, die durch den Auflegedorn (120), den Autoklaven (180) und Umfangsdichtungen (150) definiert sind;
Härten (906) eines Vorformlings (170) an dem Auflegedorn (120) zu einem Verbundteil (714); und
Entfernen (908) des Auflegedorns (120).

2. Verfahren (900) nach Anspruch 1, wobei:
das Antreiben (902) des Auflegedorns (120) über ein fahrerloses Transportfahrzeug (FTF) (130) durchgeführt wird.

3. Verfahren (900) nach Anspruch 1 oder 2, wobei das Verfahren ferner Folgendes umfasst:
Entformen (910) eines Verbundteils (714) aus dem Auflegedorn (120).

4. Verfahren (900) nach Anspruch 1, 2 oder 3, wobei:
das Härten (906) des Vorformlings (170) das Erhitzen (912) des Vorformlings (170) mit Heizelementen (122) an dem Auflegedorn (120) und/oder mit Heizelementen (182) an dem Autoklav (180) umfasst.

5. Verfahren (900) nach einem der Ansprüche 1 bis 4, wobei:
das Härten (906) des Vorformlings (170) das Druckbeaufschlagen (914) der Druckkammer (187) mit einem Drucksystem (190) umfasst, ferner vorzugsweise das Aufblasen (905) einer Blase (199) an dem Vorformling (170) durch Druck aus der Druckkammer (187) umfasst, wobei die Blase (199) einen hohlen Innenraum (170-1) des Vorformlings (170) gegen Verdichtung stützt.

6. Verfahren (900) nach einem der Ansprüche 1 bis 5, wobei:
das Bilden (904) der Druckkammer (187) das Abdichten (804) eines bogenförmigen Spalts (310) zwischen dem Auflegedorn (120) und dem Autoklav (180) umfasst, wobei das Abdichten (804) des bogenförmigen Spalts (310) vorzugsweise das Bilden (808) einer thermisch isolierenden Barriere umfasst.

7. Verfahren (1300) nach einem der Ansprüche 1 bis 6, wobei das Verfahren das Austreten (1308) des Auflegedorns (120) aus dem Autoklav (180) in einen nicht reinen Raum (178) umfasst.

8. System (100), das Folgendes umfasst:
einen Autoklav (180), der einen hohlen Abschnitt (189) enthält;
einen Auflegedorn (120), der eine Auflegeregion (640) für einen Vorformling (170) definiert und der so bemessen ist, dass er in den Autoklaven (180) in den hohlen Abschnitt (189) eingeführt werden kann, wodurch eine Druckkammer (187) zum Härten des Vorformlings (170) zu einem Verbundteil (714) definiert wird; und
Dichtungen (124, 150), die die Druckkammer (187) durch Überbrücken eines Spalts (310) zwischen dem Auflegedorn (120) und dem Autoklav (180) schließen.

9. System (100) nach Anspruch 8, das ferner Folgendes umfasst:
ein fahrerloses Transportfahrzeug (FTF) (130), das den Auflegedorn (120) in den hohlen Abschnitt (189) treibt.

10. System (100) nach Anspruch 8 oder 9, wobei:
sowohl der Auflegedorn (120) als auch der Autoklav (180) Heizelemente (122, 182) zum Härten des Vorformlings (170) zu dem Verbundteil (714) enthalten, wobei die Heizelemente (122, 182) vorzugsweise Widerstandsheizungen (126) und/oder Suszeptoren (127) umfassen.

11. System (100) nach Anspruch 8, 9 oder 10, das ferner Folgendes umfasst:
ein Drucksystem (190), das die Druckkammer (187) mit Druck beaufschlagt.

12. System (100) nach einem der Ansprüche 8 bis 11, wobei:
die Druckkammer (187) bogenförmig ist und/oder der Auflegedorn (120) bogenförmig ist.

13. System (100) nach einem der Ansprüche 8 bis 12, wobei:
der Autoklav (180) einen Abschnitt einer Begrenzung (192) einer Reinraumumgebung (177) bildet.

14. System (100) nach einem der Ansprüche 8 bis 13, wobei:
der Autoklav (180) ferner Entlüftungsöffnungen (183) umfasst, um erwärmte Luft in die zwischen dem Auflegedorn (120) und dem Autoklav (180) gebildete Druckkammer (187) zu leiten.

15. Herstellen eines Abschnitts eines Flugzeugs (1402) unter Verwendung des Systems (100) nach einem der Ansprüche 8 bis 14.

## Revendications

1. Procédé (900) de formation d'une chambre de pression (187) au niveau d'un autoclave, le procédé comprenant les opérations consistant à :
faire entrer (902) un mandrin de confection (120) selon une direction de procédé (179) dans un autoclave (180),
former (904) la chambre de pression (187) dont les délimitations sont définies par le mandrin de confection (120), l'autoclave (180) et des joints périmétriques (150),
faire durcir (906) une préforme (170) au niveau du mandrin de confection (120) pour obtenir une pièce composite (714), et
retirer (908) le mandrin de confection (120).

2. Procédé (900) selon la revendication 1, dans lequel :
l'entrée (902) du mandrin de confection (120) est effectuée par le biais d'un véhicule à guidage automatique (VGA) (130).

3. Procédé (900) selon la revendication 1 ou 2, comprenant en outre l'opération consistant à :
démouler (910) une pièce composite (714) du mandrin de confection (120).

4. Procédé (900) selon la revendication 1, 2 ou 3, dans lequel :
le durcissement (906) de la préforme (170) comprend le chauffage (912) de la préforme (170) avec des éléments chauffants (122) du mandrin de confection (120) et/ou avec des éléments chauffants (182) de l'autoclave (180).

5. Procédé (900) selon l'une quelconque des revendications 1 à 4, dans lequel :
le durcissement (906) de la préforme (170) comprend la mise sous pression (914) de la chambre de pression (187) avec un système de pression (190), et comprend de préférence en outre le gonflage (905) d'une vessie (199) au niveau de la préforme (170) grâce à la pression de la chambre de pression (187), ladite vessie (199) supportant un intérieur creux (170-1) de la préforme (170) de manière à éviter un compactage.

6. Procédé (900) selon l'une quelconque des revendications 1 à 5, dans lequel :
la formation (904) de la chambre de pression (187) comprend l'hermétisation (804) d'un espace arqué (310) entre le mandrin de confection (120) et l'autoclave (180), l'hermétisation (804) de l'espace arqué (310) comprenant de préférence la formation (808) d'une barrière thermiquement isolante.

7. Procédé (1300) selon l'une quelconque des revendications 1 à 6, le procédé comprenant la sortie (1308) du mandrin de confection (120) de l'autoclave (180) vers une salle autre qu'une salle blanche (178).

8. Système (100) comprenant :
un autoclave (180) qui comprend une partie creuse (189),
un mandrin de confection (120) qui définit une région de confection (640) pour une préforme (170), et qui est dimensionné pour être inséré dans l'autoclave (180) dans la partie creuse (189), définissant ainsi une chambre de pression (187) destinée à faire durcir la préforme (170) pour obtenir une pièce composite (714), et
des joints (124, 150) qui ferment la chambre de pression (187) en comblant un espace (310) entre le mandrin de confection (120) et l'autoclave (180).

9. Système (100) selon la revendication 8, comprenant en outre :
un véhicule à guidage automatique (VGA) (130) qui fait entrer le mandrin de confection (120) dans la partie creuse (189).

10. Système (100) selon la revendication 8 ou 9, dans lequel :
le mandrin de confection (120) et l'autoclave (180) comprennent tous deux des éléments chauffants (122, 182) pour faire durcir la préforme (170) en ladite pièce composite (714), lesdits éléments chauffants (122, 182) comprenant de préférence des éléments chauffants résistifs (126) et/ou des suscepteurs (127).

11. Système (100) selon la revendication 8, 9 ou 10, comprenant en outre :
un système de pression (190) qui met sous pression la chambre de pression (187).

12. Système (100) selon l'une quelconque des revendications 8 à 11, dans lequel :
la chambre de pression (187) est arquée et/ou le mandrin de confection (120) est arqué.

13. Système (100) selon l'une quelconque des revendications 8 à 12, dans lequel :
l'autoclave (180) forme une partie d'une délimitation (192) d'un environnement de salle blanche (177).

14. Système (100) selon l'une quelconque des revendications 8 à 13, dans lequel :
l'autoclave (180) comprend en outre des évents (183) pour amener l'air chauffé dans la chambre de pression (187) formée entre le mandrin de confection (120) et l'autoclave (180).

15. Fabrication d'une partie d'un aéronef (1402) à l'aide du système (100) selon l'une quelconque des revendications 8 à 14.
